Europäisches Patentamt

(19) European Patent Office

Office européen des brevets

(11) Publication number: **0 263 052 B1**

# EUROPEAN PATENT SPECIFICATION

(12)

(45) Date of publication of patent specification :.
27.02.91 Bulletin 91/09

(51) Int. Cl.$^5$: **H01M 8/00, H01M 8/24**

(21) Application number: 87630163.1

(22) Date of filing : 01.09.87

(54) Reactant distribution for multi-stack fuel cell power plants.

The file contains technical information submitted after the application was filed and not included in this specification

(30) Priority: 29.09.86 US 912751

(43) Date of publication of application:
06.04.88 Bulletin 88/14

(45) Publication of the grant of the patent:
27.02.91 Bulletin 91/09

(84) Designated Contracting States:
BE DE FR GB NL

(56) References cited:
GB-A- 2 039 134
US-A- 3 668 011
US-A- 3 711 333
US-A- 3 817 792

(73) Proprietor: INTERNATIONAL FUEL CELLS CORPORATION
185 Governor's Highway
South Windsor, Connecticut 06074 (US)

(72) Inventor: Katz, Murray
83 Whitewood Road
Newington Connecticut 06111 (US)

(74) Representative: Bleyer, Jean et al
OFFICE DENNEMEYER S.à.r.l. P.O. Box 1502
L-1015 Luxembourg (LU)

## Description

This invention relates to a fueling system of a multi-stack fuel cell power plant and to a method of fueling a multi-stack fuel cell power plant.

In order to enable the production of commercially viable amounts of electricity from fuel cells, the cells are arranged in stacks which operate as a unit to provide the desired power. The individual cells in the stack are generally flatly configured and are coaxially stacked and connected electrically in series with the electricity generated flowing in the direction of the stack axis through each cell in the stack, and thence into a DC-to-AC converter. The hydrogen enriched fuel which is used as a source of hydrogen ions and electrons is fed through the individual cells in the stack in a direction transverse to the axis of the stack. Dissemination of the fuel to the cells in the stack is accomplished by means of inlet and outlet manifolds which extend up opposite sides of the stack and which are connected to fuel inlet and outlet pipes.

For the stack to function properly, it is essential that each fuel cell in the stack be provided with sufficient fuel at least equivalent to the current which is forced through it by operation of the other cells in the stack. It is axiomatic that uniform fuel supply problems to each cell will intensify, the greater the number of cells in the stack. Due to variations in dimensional tolerances, the fuel flow will vary to each cell in the stack. It is likewise axiomatic that the more fuel cells a stack contains, the more electricity it will produce. Thus a considerable problem of adequate distribution of fuel can arise with a stack which contains, for example, five hundred fuel cells in it, which is a reasonable number of cells for a commercially viable stack to have.

For efficient operation of a stack, the cells should consume from 80 to 90% or more of the fuel supplied to them. Thus, by way of illustration, if one hundred moles of fuel is supplied to a stack, ideally 80 to 90 moles should be consumed by the stack leaving 10 to 20 moles of fuel to be exhausted from the stack. In the event that due to dimensional tolerances some of the cells will receive more than their desirable mole share, then less available fuel is left for the other cells in the stack. Should a cell in the stack consume all of the fuel available to it because of inadequate fuel supply caused by other cells receiving more than their share, then that cell can go to a negative state. This is due to a lack of hydrogen atoms resulting from the lack of available fuel for the oxidation reaction. Such a negative state cell will consume or corrode the materials of the cell and fail in a short period of time, thus causing failure of the stack.

The aforesaid fuel starvation and stack failure problem is magnified manyfold in the case of power utility size operations which produce megawatts of power and require concurrent operation of many stacks to produce such quantities of power. In the prior art, the feeding of the fuel to a multi-stack power plant has been accomplished in parallel fashion. For example, if the power plant has three stacks, each of which can utilize 100 moles of fuel, and each of which is to run at a 90% utilization rate, then 300 moles of fuel are needed to run the plant. The 300 moles of fuel are divided equally and fed in parallel fashion, 100 moles to each stack. With 90% utilization, each stack will produce a 10 mole depleted fuel exhaust. Thus each stack will only have a 10 mole cushion to ensure against individual cell fuel starvation, and potential stack failure.

The distribution system of this invention utilizes the same starting amount of fuel, operates the stacks at the same utilization rate, and produces the same depleted fuel concentration for the power plant as the aforesaid prior art, but ensures that there will be no chance for fuel cell failure due to fuel starvation. Using the distribution system of this invention, an individual stack will never be required to utilize more than the overall percent of the fuel utilized by the system, thus there will always be at least an excess fuel cushion to ensure that individual cell fuel starvation failure will not occur. In order to achieve the aforesaid result, the fuel is fed to the stacks at least partially in serial fashion, with the depleted fuel exhaust from one or more stacks being used as the fuel supply for one or more subsequent stacks in the system. The stacks can be fed in pure serial fashion one after another, or they can be fed in stages, partly in parallel fashion, and partly in serial fashion. In the latter format, less than all of the stacks will be initially fed equal proportions of the total fuel needed, and the partially depleted fuel exhausted by them will be combined and fed into one or more subsequent stacks. The partially depleted fuel exhausted by the initial stack or stacks in the series is fed directly into the subsequent stack or stacks in the series without any enrichment other than combining with other stack exhausts, if present.

The aim of the present invention is to ensure that each cell in the plant will receive adequate fuel for proper functioning and to provide a fueling system and a method of fueling a multi-stack fuel cell power plant wherein an excess fuel cushion is provided to ensure that no cell will experience fuel starvation due to excessive consumption of fuel by other cells in the stack.

According to the invention there is now proposed a fueling system of a multi-stack fuel cell power plant comprising

a first power-generating stage including one or more fuel cell stacks ;

a second power-generating stage including one or more fuel cell stacks wherein the individual cells in a stack are connected electrically in series, characterized by :

a) means providing an amount of fuel to said system sufficient to operate all of the stacks in the system at a predetermined fuel utilization rate ;

b) means for delivering all of said amount of fuel to said first stage for operation of the latter ;

c) means for delivering fuel exhausted from said first stage to said second stage for operation of the latter, said fuel exhausted from said first stage comprising more fuel than is necessary to operate said second stage at said predetermined fuel utilization rate ;

wherein the fuel used in the fuel cell stacks is a hydrogen enriched fuel.

According to the invention there is also proposed a method of fueling a multi-stack fuel cell power plant in which the individual cells of each stack are connected electrically in series, comprising the steps of :

a) providing a supply of fuel sufficient to furnish each stack in the plant, with a predetermined aliquot of operating fuel ;

b) feeding all of said supply of fuel into a first stage of the plant, which first stage includes one or more stacks ;

c) feeding exhaust fuel from said first stage into a second stage of the plant, which second stage includes one or more stacks whereby each stack in the plant is supplied with an amount of operating fuel which is greater than said predetermined aliquot ;

d) wherein the fuel used is a hydrogen enriched fuel.

Preferably the fueling system for a multi-stack power plant is operated with a predetermined aliquot of said amount of fuel for each stack, the fuel exhausted from said first stage comprising more fuel than the sum of said fuel aliquots for each stack in said second stage, the system comprising :

a) a second power generating stage wherein the number of fuel cell stacks is less than the number of stacks in said first stage ;

b) means for delivering all of said amount of fuel in equal shares, each of which is larger than said predetermined aliquot, to each of said stacks to said first stage ;

c) exhaust conduit means interconnecting said stacks in said first stage with said stacks in said second stage, said exhaust conduit means being operable to combine fuel exhausted from said stacks in said first stage and deliver said combined fuel to the stacks in the second stage in equal shares which shares are larger than said predetermined aliquot of fuel whereby each stack in the system operates with a supply of fuel which is larger than said predetermined aliquot.

According to the invention there is also proposed a multi-stack fuel cell power plant comprising a series of fuel cell stacks having an initial stack, one or more medial stacks and a final stack, the individual cells in each stack being connected electrically in series with the electricity generated flowing in the direction of the stacks axis through each cell in the stack and thence into a DC-to-AC converter, comprising :

a) means providing an amount of fuel to said series of stacks sufficient to operate each of the stacks in the series with a predetermined aliquot of said amount of fuel ;

b) means for feeding all of said amount of fuel to said initial stack ;

c) means for feeding exhaust from said initial stack to one of said medial stacks and for feeding seriatim exhaust from one stack to another stack whereby each stack, save said initial stack, is fueled solely by exhaust from a preceding stack ;

d) wherein the exhaust from each stack, save said final stack, contains more fuel than said predetermined aliquot whereby said stack in the series operates with a supply of fuel which is larger than said predetermined aliquot ;

e) wherein the fuel is a hydrogen enriched fuel.

FIGURE 1 is a schematic block diagram illustrating the prior art system for feeding fuel to a multi-stack power plant ;

FIGURE 2 is a block diagram similar to FIGURE 1 but showing a first preferred embodiment of a fuel feeding system for a multi-stack power plant which operates in accordance with this invention ; and

FIGURE 3 is a block diagram similar to FIGURE 2 but showing a second embodiment of a feeding system operating in accordance with this invention.

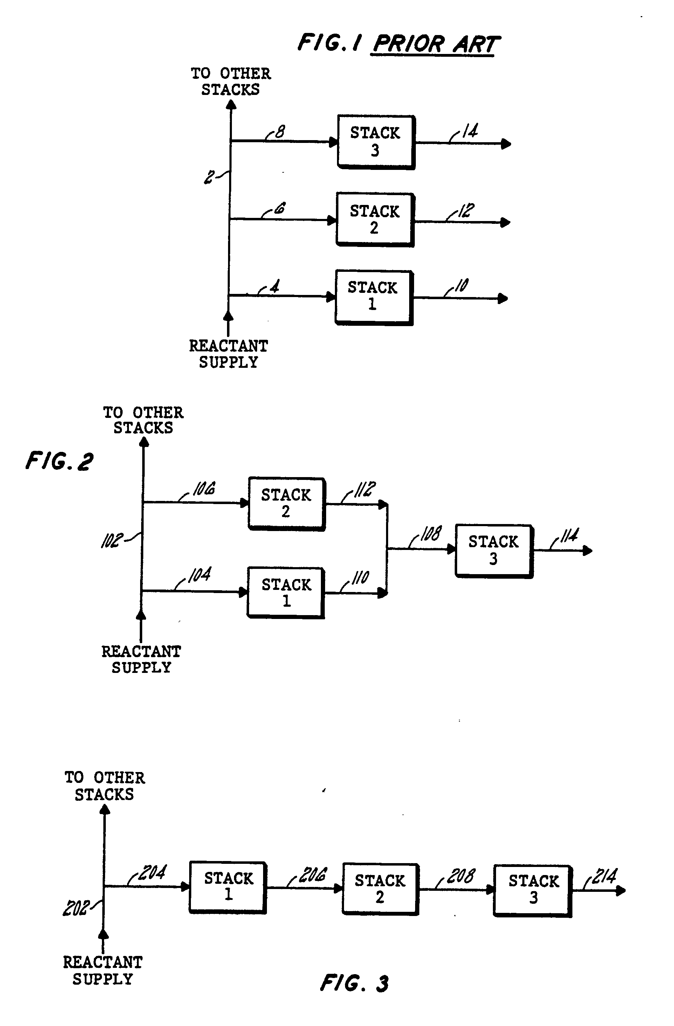

Referring now to FIGURE 1, there is shown in block diagram form a fuel feeding system for a multi-stack power plant which operates in accordance with the teachings of the prior art. The plant shown has a plurality of stacks as, for example, three. Each stack is allotted enough fuel so that it can operate at maximum efficiency by consuming 90% of that fuel allocation, or aliquot. For purposes of illustration, assume that each stack is allocated 100 moles of fuel and that it will utilize or consume 90 moles (90%) of that allocation. The total fuel thus fed into the three stacks shown would be 300 moles which is fed through the conduit 2. The 300 moles of fuel is divided into equal 100 mole portions which are fed individually into STACK 1, STACK 2, and STACK 3 via branch conduits 4, 6 and 8 respectively. With each stack utilizing 90% of its fuel allocation, 10 moles of fuel will be exhausted from each stack through exhaust conduits 10, 12 and 14. Thus the total fuel input is 300 moles, the total fuel consumption is 270 moles, and the total fuel exhausted is 30 moles, assuming a 90% utilization rate. Obviously, the consumption and exhaust figures will vary should the consumption rate be changed. With the parallel feed system, each stack has only a 10 mole cushion to use to guard against individual cell fuel starvation in the event of excessive percent fuel consumption due to low flow of fuel to one or more cells in a stack. This cushion could be increased by increasing the fuel allocated to each stack, however, such an approach would be wasteful of the fuel. In order to minimize the occurrence of cell fuel starvation when operating with such a small excess fuel cushion, cell and stack component specification tolerances become so tight that commercial impracticality of the power plant concept is markedly increased. It will be noted in FIGURE 1 that there may be other stacks in the system which will be fueled in a similar manner. It is understood that the 300 moles of fuel referred to above is merely the aliquot of the total fuel which is allotted to the stacks actually shown.

Referring now to FIGURE 2, there is shown a preferred fuel distribution system for three stacks which operates in accordance with this invention. The allotted three stacks aliquot of 300 moles of fuel is delivered to the stacks via the conduit 102. The 300 moles of fuel is divided into equal 150 mole shares, one of which is fed into STACK 1 through conduit 104 and the other of which is fed into STACK 2 through conduit 106. STACK 1 and STACK 2 operate at the 90 moles fuel consumption rate and thus each will consume about 90 moles of the 150 moles fed into it. Thus each stack will exhaust 60 moles into the exhaust conduits 110 and 112. This means that the fuel starvation cushion for each of STACK 1 and STACK 2 is 60 moles. STACK 1 and STACK 2, using the system shown in FIGURE 2 with the preferred 90 mole consumption rates will consume only 60% of the fuel fed into each of them. The two 60 mole exhausts from STACK 1 and STACK 2 are then combined in conduit 108 so that STACK 3 is fed 120 moles of fuel. STACK 3 operates at its preferred 90 mole consumption level thus consuming 90 of the 120 moles of fuel and exhausts the remaining 30 moles of fuel through conduit 114. Thus STACK 3 has a 30 mole fuel starvation cushion when operating at its preferred consumption level. It will be noted that STACK 3 will thus consume only 75% of the fuel fed into it. The system shown in FIGURE 2 thus feeds the same initial total fuel into the three stack power source, i.e. 300 moles, as that shown in FIGURE 1, but in the FIGURE 2 system, each stack is provided with a much greater fuel starvation cushion during operation. This additional leeway is provided merely by properly arranging the feeding sequence and does not require any additional fuel enrichment anywhere in the system. With the additional fuel cushion provided by this system, manufacturing tolerances are significantly relaxed so that the concept of a multi-stack commercial utility power source becomes commercially viable. Dimensional tolerances do not need to be severe to ensure that all cells in the stack receive their required share of total fuel available using the system of FIGURE 2 since during the feeding of each stack, there is ample extra fuel available to accommodate some cells using more than their ideal share. It will likewise be appreciated that additional stacks can be fed in a like manner. For example, a six stack power plant can be fed in a five to one parallel serial system, or, less preferred, in a three, two, one parallel serial system. It will be noted that the essence of the system shown in FIGURE 2 is that the exhausted fuel from all stacks except the terminal stack or stacks adds to the fuel cushion available for any subsequent stacks. Such is not the case for the prior art system shown in FIGURE 1.

It will be appreciated that the system of this invention facilitates the fabrication of stacks in modular building block-type units which can be used to construct large multi-stack plants. When a system of stacks is fueled using this system, the percent of the fuel utilized by the last stack in the system will always be less than the overall utilization of the system, and can be calculated by the formula :

$$U_L = U_{overall}/U_{overall} + N(100-U_{overall})$$

wherein $U_L$ is the percent of fuel utilized by the last stack in the system, $U_{overall}$ is the percent of fuel utilized by the total system and N is the number of stacks in the system.

Referring now to FIGURE 3, there is shown a second embodiment of the invention wherein the stacks are fed in purely serial fashion. The conduit 202 carries the requisite 300 moles of fuel, all of which is fed into STACK 1 via conduit 204. STACK 1 consumes its 90 mole portion of the fuel and exhausts 210 moles into STACK 2 through conduit 206. STACK 2 then consumes its 90 mole share of the 210 moles and exhausts 120 moles into STACK 3 through conduit 208. STACK 3 consumes its 90 mole share and exhausts 30 moles of the fuel through conduit 214. With the system shown in FIGURE 3, STACK 1 consumes 30% of the fuel fed into it, STACK 2 consumes 42.8% of the fuel fed into it, and STACK 3 consumes 75% of the fuel fed into it. As in each of the foregoing examples, the total fuel fed into the system is 300 moles and the total fuel exhausted from the system is 30 moles. The system shown in FIGURE 3, like that shown in FIGURE 2, allows fabrication of stack components with more relaxed dimensional tolerances due to the increased fuel cushion and thus is viable for use in a multi-stack commercial utility power plant.

The embodiment shown in FIGURE 2 is preferred over the embodiment of FIGURE 3 due to the fact that the former has fewer stages and thus requires less pressure to pump the fuel through the system, or for the same inlet pressure, results in lower pressure loss.

It will be readily appreciated that the system of this invention will greatly minimize or eliminate fuel cell stack failure in multi-stack power plants due to individual cell fuel starvation. The system provides these advantages without the need to increase fuel input or exhaust. Use of the system renders practical, commercial utility sized multi-stack power plants due to relaxation of manufacturing tolerances. The oxygen can be fed into the stacks serially or in parallel fashion.

## Claims

1. A fueling system of a multi-stack fuel cell power plant comprising

a first power-generating stage including one or more fuel cell stacks ;

a second power-generating stage including one or more fuel cell stacks wherein the individual cells in a stack are connected electrically in series, characterized by :

a) means providing an amount of fuel to said system sufficient to operate all of the stacks in the system at a predetermined fuel utilization rate ;

b) means for delivering all of said amount of fuel to said first stage for operation of the latter ;

c) means for delivering fuel exhausted from said first stage to said second stage for operation of the latter, said fuel exhausted from said first stage comprising more fuel than is necessary to operate said second stage at said predetermined fuel utilization rate ;

wherein the fuel used in the fuel cell stacks is a hydrogen enriched fuel.

2. A fueling system of a multi-stack fuel cell power plant according to claim 1, characterized in that each stack of the system is operated with a predetermined aliquot of said amount of fuel, said fuel exhausted from said first stage comprising more fuel than the sum of said fuel aliquots for each stack in said second stage whereby each stack in said second stage is protected against shutdown due to fuel starvation of its individual cells.

3. A fueling system of a multi-stack fuel cell power plant in accordance with any of claims 1 or 2, characterized by :

a) a second power generating stage wherein the number of fuel cell stacks is less than the number of stacks in said first stage ;

b) means for delivering all of said amount of fuel in equal shares, each of which is larger than said predetermined aliquot, to each of said stacks to said first stage ;

c) exhaust conduit means interconnecting said stacks in said first stage with said stacks in said second stage, said exhaust conduit means being operable to combine fuel exhausted from said stacks in said first stage an deliver said combined fuel to the stacks in the second stage in equal shares which shares are larger than said predetermined aliquot of fuel whereby each stack in the system operates with a supply of fuel which is larger than said predetermined aliquot.

4. A multi-stack fuel cell power plant comprising a series of fuel cell stacks having an initial stack, one or more medial stacks an a final stack, the individual cells in each stack being connected electrically in series with the electricity generated flowing in the direction of the stack axis through each cell in the stack an thence into a DC-to-AC converter, comprising

a) means providing an amount of fuel to said series of stacks sufficient to operate each of the stacks in the series with a predetermined aliquot of said amount of fuel ;

b) means for feeding all of said amount of fuel to said initial stack ;

c) means for feeding exhaust from said initial stack to one of said medial stacks an for feeding seriatim exhaust from one stack to another stack whereby each stack, save said initial stack, is fueled solely by exhaust from a preceding stack ;

d) wherein the exhaust from each stack, save said final stack, contains more fuel than said predetermined aliquot whereby said stack in the series operates with a supply of fuel which is larger than said predetermined aliquot ;

e) wherein the fuel is a hydrogen enriched fuel.

5. A method of fueling a multi-stack fuel cell power plant in which the individual cells of each stack are connected electrically in series, comprising the steps of :

a) providing a supply of fuel sufficient to furnish each stack in the plant with a predetermined aliquot of operating fuel ;

b) feeding all of said supply of fuel into a first stage of the plant, which first stage includes one or more stacks ;

c) feeding exhaust fuel from said first stage into a second stage of the plant, which second stage includes one or more stacks whereby each stack in the plant is supplied with an amount of operating fuel which is greater than said predetermined aliquot ;

d) wherein the fuel used is a hydrogen enriched fuel.

6. The method of claim 5, characterized in that said second stage has fewer stacks than said first stage.

7. The method of claim 6, characterized by combining the exhaust fuel from said stacks in said first stage and feeding said combined fuel to said one or more stacks in said second stage.

8. Method according to claims 5-7, characterized in that said supply of fuel is divided into equal portions, each of which is fed with a parallel fuel feed arrangement into each stack of said first stage whereby each stack in the first stage receives an equal share of the fuel needed to operate the entire system at a predetermined fuel utilization rate.

9. Method according to any of claims 5-8, characterized in that the second stage comprises only one stack whereby the fuel utilization rate of the last stack is defined by the formula

$$U_L = U_{overall}/[U_{overall} + N(100-U_{overall})]$$

wherein $U_L$ is the percent of fuel utilized by the last stack, $U_{overall}$ is the percent of fuel utilized by the entire system, and N is the number of stacks in the system and wherein each of the stacks is operated in an equivalent manner.

## Ansprüche

1. Brennstoffversorgungssystem für eine Mehrstapelbrennstoffzellenkraftanlage, mit :
einer ersten Stromerzeugungsstufe, die einen oder mehrere Brennstoffzellenstapel enthält ;
einer zweiten Stromerzeugungsstufe, die einen oder mehrere Brennstoffzellenstapel enthält, wobei die einzelnen Zellen in einem Stapel elektrish in Reihe geschaltet sind, gekennzeihnet durch :

a) eine Einrichtung, die dem System eine Brennstoffmenge liefert, welche ausreicht, um sämtliche Stapel in dem System mit einer vorbestimmten Brennstoffausnutzungsrate zu betreiben ;
b) eine Einrichtung zum Fördern der gesamten Brennstoffmenge zu der ersten Stufe zum Betreiben derselben ;
c) eine Einrichtung zum Fördern des aus der ersten Stufe abgegebenen Brennstoffes zu der zweiten Stufe zum Betreiben derselben, wobei der aus der ersten Stufe abgegebene Brennstoff mehr Brennstoff enthält, als notwendig ist, um die zweite Stufe mit der vorbestimmten Brennstoffausnutzungsrate zu betreiben ;
wobei der in den Brennstoffzellenstapeln benutzte Brennstoff ein mit Wasserstoff angereicherter Brennstoff ist.

2. Brennstoffversorgungssystem für eine Mehrstapelbrennstoffzellenkraftanlage nach Anspruch 1, dadurch gekennzeichnet, daß jeder Stapel des Systems mit einer vorbestimmten Aliquote der Brennstoffmenge betrieben wird, wobei der aus der ersten Stufe abgegebene Brennstoff mehr Brennstoff enthält als die Summe der Brennstoffaliquoten für jeden Stapel in der zweiten Stufe, wodurch jeder Stapel in der zweiten Stufe gegen eine Abschaltung aufgrund von Brennstoffunterversorgung seiner einzelnen Zellen geschützt ist.

3. Brennstoffversorgungssystem für eine Mehrstapelbrennstoffzellenkraftanlage nach Anspruch 1 oder 2, gekennzeichnet durch :

a) eine zweite Stromerzeugungsstufe, in der die Anzahl der Brennstoffzellenstapel kleiner ist als die Anzahl der Stapel in der ersten Stufe ;

b) eine Einrichtung zum Fördern der gesamten. Brennstoffmenge in gleichen Anteilen, von denen jeder größer ist als die vorbestimmte Aliquote, zu jeden Stapel in der ersten Stufe ;
c) eine Ausstoßleitungseinrichtung, welche die Stapel in der ersten Stufe mit den Stapeln in der zweiten Stufe verbindet, wobei die Ausstoßleitungseinrichtung so betreibbar ist, daß sie den aus den Stapeln in der ersten Stufe ausgestoßenen Brennstoff vereinigt und den vereinigten Brennstoff zu den Stapeln in der zweiten Stufe in gleichen Anteilen fördert, wobei die Anteile größer sind als die vorbestimmte Aliquote von Brennstoff, wodurch jeder Stapel in dem System mit einer Brennstoffzufuhr arbeitet, die größer als die vorbestimmte Aliquote ist.

4. Mehrstapelbrennstoffzellenkraftanlage mit einer Reihe von Brennstoffzellenstapeln, die einen Anfangsstapel haben, einen oder mehrere mittelere Stapel und einen Endstapel, wobei die einzelnen Zellen in jedem Stapel elektrisch in Reihe geschaltet sind und wobei die erzeugte Elektrizität in der Richtung der Stapelachse durch jede Zelle in dem Stapel und von da aus in einen Wechselrichter fließt, mit

a) einer Einrichtung, die der Reihe von Stapeln eine Brennstoffmenge liefert, welche ausreicht, um jeden Stapel in der Reihe mit einer vorbestimmten Aliquote der Brennstoffmenge zu betreiben ;
b) einer Einrichtung, die die gesamte Brennstoffmenge dem Anfangsstapel zuführt ;
c) einer Einrichtung, die den Ausstoß aus dem Anfangsstapel einem der mittleren Stapel zuführt und seriatim den Ausstoß eines Stapels einem anderen Stapel zuführt, wodurch jeder Stapel, mit Ausnahme des Anfangsstapels, lediglich durch den Ausstoß aus einem vorhergehenden Stapel mit Brennstoff versorgt wird ;
d) wobei der Ausstoß jedes Stapels, mit Ausnahme des letzten Stapels, mehr Brennstoff enthält als die vorbestimmte Aliquote, wodurch der Stapel in der Reihe mit einer Brennstoffzufuhr arbeitet, die größer als die vorbestimmte Aliquote ist ;
e) wobei der Brennstoff ein mit Wasserstoff angereicherter Brennstoff ist.

5. Verfahren zur Brennstoffversorgung einer Mehrstapelbrennstoffzellenkraftanlage, in welcher die einzelnen Zellen jedes Stapels elektrisch in Reihe geschaltet sind, beinhaltend die folgenden Schritte :

a) Zuführen einer Brennstoffmenge, die ausreicht, um jeden Stapel in der Anlage mit einer vorbestimmten Aliquote an Betriebsbrennstoff zu versorgen ;
b) Fördern der gesamten Brennstoffzufuhr in eine erste Stufe der Anlage, wobei die erste Stufe einen oder mehrere Stapel enthält ;
c) Fördern des von der ersten Stufe ausgestoßenen Brennstoffes in eine zweite Stufe der Anlage, wobei die zweite Stufe einen oder mehrere Stapel enthält, wodurch jeder Stapel in der Anlage mit einer Menge an Betriebsbrennstoff versorgt wird, die größer als die vorbestimmte Aliquote ist ;

d) wobei der benutzte Brennstoff ein mit Wasserstoff angereicherter Brennstoff ist.

6. Verfahren nach Anspruch 5, dadurch gekennzeichnet, daß die zweite Stufe weniger Stapel als die erste hat.

7. Verfahren nach Anspruch 6, gekennzeichnet durch Vereinigen des aus den Stapeln in der ersten Stufe ausgestoßenen Brennstoffes und Fördern des vereinigten Brennstoffes zu dem einen oder den mehreren Stapeln in der zweiten Stufe.

8. Verfahren nach den Ansprüchen 5-7, dadurch gekennzeichnet, daß die Brennstoffzufuhr in gleiche Teile aufgeteilt wird, die jeweils mit einer Parallelbrennstoffzuführanordnung in jeden Stapel der ersten Stufe gefördert werden, wodurch jeder Stapel in der ersten Stufe einen gleichen Anteil des Brennstoffes empfängt, der benötigt wird, um das gesamte System mit einer vorbestimmten Brennstoffausnutzungsrate zu betreiben.

9. Verfahren nach einem der Ansprüche 5-8, dadurch gekennzeichnet, daß die zweite Stufe nur einen Stapel aufweist, wodurch die Brennstoffausnutzungsrate des letzten Stapels durch folgende Formel definiert ist

$$U_L = U_{Gesamt}/[U_{Gesamt} + N(100-U_{Gesamt})]$$

wobei $U_L$ der Prozentsatz an Brennstoff ist, der durch die letzte Stufe ausgenutzt wird, $U_{Gesamt}$ der Prozentsatz an Brennstoff ist, der durch das gesamte System ausgenutzt wird, und N die Anzahl von Stapeln in dem System ist und wobei die Stapel jeweils auf äquivalente Weise betrieben werden.

## Revendications

1. Système d' approvisionnement en combustible d'une centrale électrique équipée de plusieurs blocs de piles à combustible comprenant

un premier étage de production d'énergie comprenant un ou plusieurs blocs de piles à combustible ;

un second étage de production d'énergie comprenant un ou plusieurs blocs de piles à combustible dans lequel les piles individuelles d'un bloc sont montées électriquement en série, caractérisé par :

a) des moyens fournissant audit système une quantité suffisante de combustible pour faire fonctionner tous les blocs du système avec un pourcentage d'utilisation du combustile prédéterminé,

b) des moyens pour délivrer toute ladite quantité de combustible audit premier étage pour faire fonctionner celui-ci,

c) des moyens pour délivrer le combustible évacué dudit premier étage audit second étage pour faire fonctionner celui-ci, ledit combustile évacué dudit premier étage comprenant plus de combustile qu'il n'est nécessaire pour faire fonctionner ledit second étage avec ledit pourcentage d'utilisation de combustible prédéterminé,

dans lequel le combustile utilisé dans les blocs de piles à combustile est un combustible enrichi en hydrogène.

2. Système d'approvisionnement en combustible dune centrale électrique équipée de plusieurs blocs de piles à combustible selon la revendication 1, caractérisé en ce que chaque bloc du système fonctionne avec une quantité prédéterminée de ladite quantité de combustible, ledit combustible évacué dudit premier étage comprenant plus de combustible que la somme desdites quantités aliquotes de combustible destinées à chaque bloc dudit second étage, grâce à quoi chaque bloc dudit second étage est protégé contre toute interruption provoquée par un manque de combustible dans ses piles individuelles.

3. Système d'approvisionnement en combustible dune centrale électrique à plusieurs blocs selon la revendication 1 ou 2, caractérisé par :

a) un second étage de production d'énergie dans lequel le nombre de blocs de piles à combustible est inférieur au nombre de blocs dudit premier étage ;

b) des moyens pour délivrer l'intégralité de ladite quantité de combustible en contingents égaux, chaque contingent étant supérieur à ladite quantité prédéterminée, à chacun desdits blocs dudit premier étage ;

c) des moyens de conduits d'évacuation reliant lesdits blocs dudit premier étage auxdits blocs dudit second étage, lesdits moyens de conduit d'évacuation étant utilisés pour combiner le combustible évacué desdits blocs dudit premier étage et délivrer ledit combustible combiné aux blocs du second étage en contingents égaux, lesdits contingents étant supérieurs à ladite quantité prédéterminée de combustible, grâce à quoi chaque bloc du système fonctionne avec une quantité de combustile qui est supérieure à ladite première quantité aliquote.

4. Centrale électrique équipée de plusieurs blocs de piles à combustible comprenant une série de blocs de piles à combustible présentant un premier bloc, un ou plusieurs blocs intermédiaires et un dernier bloc, les piles individuelles de chaque bloc étant montées électriquement en série avec l'électricité générée circulant dans le sens de l'axe des blocs au travers de chaque pile du bloc et, de là, dans un convertisseurs CC en CA, comprenant :

a) des moyens pour fournir auxdites séries de blocs une quantité de combustible suffisante pour faire fonctionner chacun des blocs des séries avec une partie aliquote prédéterminée de ladite quantité de combustible,

b) des moyens pour fournir l'intégralité de ladite quantité de combustible audit premier bloc,

c) des moyens pour fournir le combustible évacué dudit premier bloc à l'un desdits blocs intermédiaires et pour fournir le combustible successivement évacué d'un bloc à l'autre, chaque bloc, à l'exception du premier bloc, étant uniquement alimenté par le combustible évacué par un bloc précédent,

d) dans laquelle le combustible évacué par chaque bloc, à l'exception du dernier bloc, contient une quantité de combustible supérieure à ladite quantité prédéterminée, ce dit bloc de la série fonctionnant avec une alimentation en combustile qui est supérieure à ladite quantité prédéterminée,

e) dans laquelle le combusible est un combustible enrichi en hydrogène.

5. Procédé d'approvisionnement en combustible d'une centrale électrique équipée de plusieurs blocs de piles à combustible dans lequel les piles individuelles de chaque bloc sont montées électriquement en série, comprenant les étapes consistant à :

a) fournir une quantité de combustible suffisante pour approvisionner chaque bloc de la centrale avec une quantité prédéterminée de combustible opératoire,

b) fournir l'intégralité de ladite quantité de combustible à un premier étage de la centrale, lequel premier étage comprend un ou plusieurs blocs,

c) fournir le combustible évacué dudit premier étage à un second étage de la centrale, lequel étage comporte un ou plusieurs blocs, à la suite de quoi chaque bloc dans la centrale est alimenté avec une quantité de combustible opératoire supérieure à ladite quantité prédéterminée,

d) dans lequel le combustible utilisé est un combustible à base d'hyrogène enrichi.

6. Procédé selon la revendication 5, caractérisé en ce que ledit second étage possède moins de blocs que ledit premier étage.

7. Procédé selon la revendication 6, caractérisé par la combinaison du combustible évacué desdits blocs dudit premier étage et son alimentation dans l'un ou plusieurs bloc(s) dudit second étage.

8. Procédé selon les revendications 5 à 7, caractérisé en ce que ladite quantité de combustible est divisée en contingents égaux, chacune de ceux-ci étant fourni, grâce à un dispositif d'alimentation en combustible en parallèle, à chaque bloc dudit premier étage, grâce à quoi chaque bloc dudit premier étage reçoit un contingent égal du combustible nécessaire pour faire fonctionner l'intégralité du système avec un pourcentage d'utilisation du combustible prédéterminé.

9. Procédé selon l'une quelconque des revendications 5 à 8, caractérisé en ce que ledit second étage ne possède qu'un bloc, grâce à quoi le pourcentage de combustible utilisé par le dernier bloc du système peut être défini par la formule :

$$U_L = U_{total}/[U_{total} + N(100-U_{total})]$$

dans laquelle $U_L$ représente le pourcentage de combustible utilisé par le dernier bloc du système, $U_{total}$ le pourcentage de combustible utilisé par le système tout entier et N est le nombre de blocs du système, et dans lequel chacun des blocs fonctionne de manière équivalente.

## FIG.1 PRIOR ART

TO OTHER
STACKS

STACK 3 ⟋8 ⟋14

2⟋

STACK 2 ⟋6 ⟋12

STACK 1 ⟋4 ⟋10

REACTANT
SUPPLY

FIG.2

TO OTHER
STACKS

STACK 2 ⟋106 ⟋112

102⟋

STACK 1 ⟋104 ⟋110

⟋108 STACK 3 ⟋114

REACTANT
SUPPLY

TO OTHER
STACKS

⟋204 STACK 1 ⟋206 STACK 2 ⟋208 STACK 3 ⟋214

202⟋

REACTANT
SUPPLY

FIG. 3